# EUROPEAN PATENT APPLICATION

(11) **EP 4 730 527 A2**
(43) Date of publication of application: **22.04.2026**
(21) Application number: 26164090.8
(22) Date of filing: 29.12.2021
(51) Int. Cl.: H01M 50/249

(54) **METHOD FOR MANUFACTURING BATTERY MODULE, BATTERY MODULE, BATTERY PACK, AND UNMANNED AERIAL VEHICLE**

(30) Priority: 29.12.2020 CN 202011592974
(62) Divisional of application: 21914492.0
(71) Applicant: Ningde Amperex Technology Limited, Ningde City, Fujian Province 352100 (CN)
(72) Inventor: PENG, Fanggui, Dongguan, Guangdong 523000 (CN); HUANG, Zhifei, Dongguan, Guangdong 523000 (CN); WANG, Ying, Dongguan, Guangdong 523000 (CN)
(74) Representative: Icosa

(57) **Abstract**

This application discloses a method for manufacturing a battery module, including: disposing an adapting plate on a battery cell assembly, and connecting the adapting plate to tabs of the battery cell assembly; providing a fastening frame, where the fastening frame is provided with an accommodating cavity, and the accommodating cavity accommodates the adapting plate and at least part of the battery cell assembly; and providing a filler in a gap between the inner side of the accommodating cavity and the battery cell assembly and a gap between the inner side of the accommodating cavity and the adapting plate. This application further discloses a battery module, and a battery pack and an unmanned aerial vehicle that include the battery module.

## Description

### TECHNICAL FIELD

This application relates to the field of batteries, and in particular, to a method for manufacturing a battery module, a battery module, a battery pack, and an unmanned aerial vehicle.

### BACKGROUND

Lithium-ion batteries are characterized by high energy density, many cycles, long storage time, and the like, and therefore have great prospects in consumer electronics, electric vehicles, smart energy storage devices, electric bicycles, large unmanned aerial vehicles, and electric cars. At present, during battery processing in the industry, glue filling needs to be performed on battery modules to fasten the modules. Most of existing glue filling methods are integral glue filling or bottom glue filling, which are subject to glue overflow at voids, affecting the glue filling effect and leaving residual glue and overflowed glue on the exterior. In addition, the existing glue filling job requires a large amount of glue. After glue filling, the battery has lower energy density and poor heat dissipation. Moreover, glue filling costs much.

### SUMMARY

In view of this, it is necessary to provide a method for manufacturing a battery module, a battery module, a battery pack, and an unmanned aerial vehicle.

A first aspect of embodiments of this application provides a method for manufacturing a battery module, including: disposing an adapting plate on a battery cell assembly, and connecting the adapting plate to tabs of the battery cell assembly; placing a fastening frame upside down, where the fastening frame includes an accommodating cavity with an opening on one side, the accommodating cavity is configured to accommodate the adapting plate and at least part of the battery cell assembly, and the placing a fastening frame upside down means placing the opening side of the accommodating cavity of the fastening frame upward; placing the adapting plate and the at least part of the battery cell assembly upside down in the accommodating cavity, where the placing the adapting plate and the at least part of the battery cell assembly upside down means placing the adapting plate and the battery cell assembly into the accommodating cavity of the fastening frame, with an end of the battery cell assembly at which the adapting plate is provided facing downward; and providing a filler in a gap between the inner side of the accommodating cavity the battery cell assembly and a gap between the inner side of the accommodating cavity and the adapting plate.

With reference to the first aspect, in a first possible embodiment, the filler includes glue.

With reference to the first aspect, in a second possible embodiment, the fastening frame is a transparent structure, and adding of the filler is observed through the fastening frame.

With reference to the first aspect, in a third possible embodiment, filling is performed on both sides of the fastening frame.

With reference to the first aspect, in a fourth possible embodiment, the fastening frame includes a top wall, two side walls, and two end walls, where the top wall, the two side walls, and the two end walls enclose the accommodating cavity, the top wall of the fastening frame is provided with a limiting step, and the limiting step is disposed in the accommodating cavity; and the step of accommodating the adapting plate and at least part of the battery cell assembly using the accommodating cavity includes pressing the fastening frame to flatten the limiting step onto the adapting plate.

With reference to the first aspect, in a fifth possible embodiment, before the step of providing a filler in a gap between the inner side of the accommodating cavity and the battery cell assembly and the adapting plate, the method further includes:
providing a wire harness, connecting one end of the wire harness to the battery cell assembly or the adapting plate accommodated in the accommodating cavity, and leading the other end of the wire harness out of the accommodating cavity.

With reference to the first aspect to the fifth possible embodiment, in a sixth possible embodiment, the wire harness includes a power wire harness connected to the tabs of the battery cell assembly, and the accommodating cavity is provided with a harness outlet; and the step of leading the other end of the wire harness out of the accommodating cavity includes: leading the power wire harness through the harness outlet, and filling the harness outlet with fixing glue to fill a void between the power wire harness and the harness outlet.

With reference to the first aspect to the fifth possible embodiment, in a seventh possible embodiment, the wire harness includes a sampling wire harness connected to the adapting plate, and the accommodating cavity is provided with a wire harness hole; and the step of leading the other end of the wire harness out of the accommodating cavity includes: leading the sampling wire harness through the wire harness hole, and filling the wire harness hole with fixing glue to fill a void between the sampling wire harness and the wire harness hole.

A second aspect of the embodiments of this application provides a battery module, including a battery cell assembly, an adapting plate, a fastening frame, and a filler. The adapting plate disposed on the battery cell assembly and connected to tabs of the battery cell assembly. The fastening frame is provided with an accommodating cavity. The adapting plate is further provided with a chip, and the adapting plate, the chip, and at least part of the battery cell assembly are accommodated in the accommodating cavity. The filler is provided in a gap between the inner side of the accommodating cavity and the battery cell assembly or the adapting plate.

With reference to the second aspect, in a first possible embodiment, the fastening frame is a transparent structure.

With reference to the second aspect or the first possible embodiment, in a second possible embodiment, the filler includes glue.

With reference to the second aspect to the second possible embodiment, in a third possible embodiment, the chip is an encryption chip, where the encryption chip is configured to encrypt a matching between the battery module and an external electric device.

With reference to the second aspect, in a fourth possible embodiment, the fastening frame includes a top wall, two side walls, and two end walls, where the top wall, the two side walls, and the two end walls enclose the accommodating cavity, the battery cell assembly includes a plurality of battery cells, the battery cell includes a body and tabs, and the tabs of the battery cell are at least partially accommodated in the accommodating cavity.

With reference to the second aspect to the fourth possible embodiment, in a fifth possible embodiment, the body of the battery cell is at least partially accommodated in the accommodating cavity.

With reference to the second aspect to the fourth possible embodiment, in a sixth possible embodiment, a limiting step is provided in the accommodating cavity, where the limiting step is provided on the top wall, and the limiting step abuts against the adapting plate.

With reference to the second aspect to the sixth possible embodiment, in a seventh possible embodiment, an extension direction of the limiting step is perpendicular to a stacking direction of the battery cells to form a flow channel for adding the filler, helping to add the filler.

With reference to the second aspect to the fourth possible embodiment, in an eighth possible embodiment, the battery module further includes a wire harness, where one end of the wire harness is connected to the battery cell assembly or the adapting plate accommodated in the accommodating cavity, and the other end goes out of the accommodating cavity.

With reference to the second aspect to the eighth possible embodiment, in a ninth possible embodiment, the wire harness includes a power wire harness and a sampling wire harness, where the power wire harness is connected to the two tabs on the outside of the battery cell assembly, and the sampling wire harness is electrically connected to the adapting plate.

With reference to the second aspect to the ninth possible embodiment, in a tenth possible embodiment, an escape groove is provided in the accommodating cavity, and the power wire harness is welded and connected to the tabs, and is accommodated in the escape groove.

With reference to the second aspect to the tenth possible embodiment, in an eleventh possible embodiment, a bottom wall of the escape groove is further provided with a harness outlet running through the top wall, where the harness outlet is for the power wire harness to go out of the fastening frame.

With reference to the second aspect to the ninth possible embodiment, in a twelfth possible embodiment, a wire harness hole is provided in the top wall, where the wire harness hole is for the sampling wire harness to go out of the fastening frame and fastening the sampling wire harness. In some embodiments, the filler includes glue, and the filler is added into the accommodating cavity. After the filler is cured, a circuit board, the battery cell assembly, and the fastening frame are fastened.

In some embodiments, the filler includes glue, the filler is filled into the accommodating cavity, and the filler fixes the battery cell assembly, the adapting plate and the fastening frame after the filler cured.

In some embodiments, the limiting step abuts against a plate body of the adapting plate that is not connected to the tabs.

In some embodiments, a gap between the harness outlet and the wire harness is provided with fixing glue, and the fixing glue is cured before the filler.

In some embodiments, the accommodating cavity is further provided with a glue groove, and the glue groove is provided in the side wall or the end wall.

In some embodiments, the glue groove is provided in two end walls along an extending direction of the limiting step.

In some embodiments, the glue groove is recessed on a surface of the end wall towards a direction leaving the other end wall.

In some embodiments, the top wall includes a first side and a second side disposed opposite each other, the adapting plate and the battery cell assembly are disposed on the first side of the top wall, and the fastening frame includes a through hole running through the top wall.

The adapting plate and at least part of the battery cell assembly are accommodated in the accommodating cavity.

The fastening frame further includes an escape groove, the escape groove further includes an escape groove side wall extending from the top wall, the escape groove side wall is disposed on the second side of the top wall, and the escape groove side wall is provided with a fastening hole communicating with the through hole; and the one end of the wire harness is connected to the battery cell assembly or the adapting plate, and the other end of the wire harness passes through the through hole and the fastening hole and disposed on the second side of the top wall.

In some embodiments, the filler includes glue, the escape groove includes a bottom wall and a plurality of escape groove side walls, the bottom wall is connected to an end of the plurality of escape groove side walls leaving the top wall, the escape groove further includes a harness outlet running through the bottom wall, and the harness outlet is connected to the fastening hole; and a gap between the harness outlet and the wire harness is provided with fixing glue, and the fixing glue is cured before the filler; and/or
a gap between the fastening hole and the wire harness is provided with fixing glue, and the fixing glue is cured before the filler.

In some embodiments, the adapting plate is provided with a support sheet, the wire harness is connected to the battery cell assembly through the support sheet, and the support sheet is accommodated in the escape groove.

In some embodiments, the escape groove is provided with the filler.

In some embodiments, the fastening frame includes a top wall, the top wall includes a first side and a second side disposed opposite each other, the battery cell assembly and the accommodating cavity are provided on the first side of the top wall, and the battery cell assembly includes a plurality of stacked battery cells, where the battery cell includes a body and tabs; and the battery module further includes a binding piece, where in a stacking direction of the battery cells, the binding piece disposed between at least two adjacent bodies, so that a gap is formed between the two adjacent bodies, where the gap communicates with the accommodating cavity, and the binding piece is disposed outside the accommodating cavity.

In some embodiments, an end of the binding piece close to the fastening frame is located between two adjacent bodies.

In some embodiments, an opening of the accommodating cavity faces towards the binding piece.

In some embodiments, the fastening frame further includes two side walls connected to the top wall and two end walls connected to the top wall, where the top wall, the two side walls, and the two end walls enclose the accommodating cavity.

In some embodiments, the two side walls are disposed opposite each other along the stacking direction of the battery cells, the two end walls are connected to the two side walls, and the two end walls are disposed opposite each other.

In some embodiments, a gap is provided between the end wall and the battery cell assembly, and the gap is provided with the filler.

In some embodiments, the battery module includes a wire harness, and the fastening frame includes a through hole running through the top wall; the fastening frame further includes an escape groove, the escape groove further includes an escape groove side wall extending from the top wall, the escape groove side wall is disposed on the second side of the top wall, and the escape groove side wall is provided with a fastening hole communicating with the through hole; and one end of the wire harness is connected to the battery cell assembly or adapting plate accommodated in the accommodating cavity, and the other end of the wire harness passes through the through hole and the fastening hole and is disposed on the second side of the top wall.

In some embodiments, the other end of the wire harness passes through the fastening hole, facing towards one of the end walls.

A third aspect of the embodiments of this application further provides a battery pack, including a battery housing and a battery module, where the battery module is any battery module according to the first aspect.

A fourth aspect of the embodiments of this application further provides an unmanned aerial vehicle, including a vehicle body and a battery pack disposed in the vehicle body, where the battery pack supplies power to the vehicle body, and the battery pack is the battery pack according to the second aspect.

According to the foregoing method for manufacturing a battery module, the battery module, and the battery pack and the unmanned aerial vehicle that include the battery module, the filler is added into the accommodating cavity through upside-down filling, so that the battery cell assembly and the adapting plate are fastened to the fastening frame, thereby better dealing with working conditions such as shock, vibration, and drop. As a result, not only the head of the battery cell assembly can be protected, but also a welding component on the adapting plate can be protected. In addition, under the action of the accommodating cavity in combination with upside-down glue filling, fewer fillers are used, thereby reducing the weight and costs and improving the energy density.

### BRIEF DESCRIPTION OF DRAWINGS

FIG. 1 is a schematic structural diagram of a battery module according to an embodiment of this application.
FIG. 2 is a schematic diagram of the battery module in FIG. 1 from another perspective.
FIG. 3 is a schematic exploded view of a part of the battery module in FIG. 1.
FIG. 4 is a schematic diagram of a fastening frame in FIG. 3 from another perspective.
FIG. 5 is a flow chart of a method for manufacturing the battery module.
FIG. 6 is a schematic structural diagram of an unmanned aerial vehicle according to another embodiment.

**Reference signs of main components:**

| | |
|---|---|
| Battery module | 100 |
| Battery cell assembly | 10 |
| Battery cell | 11 |
| Battery cell body | 111 |
| Tab | 112 |
| First electrode | 12 |
| Second electrode | 13 |
| Binding piece | 17 |
| Adapting plate | 20 |
| Tab hole | 21 |
| Support sheet | 22 |
| Fastening frame | 30 |
| Top wall | 31 |
| Harness outlet | 311 |
| Fastening hole | 312 |
| Wire harness hole | 313 |
| Protective piece | 314 |
| First side | 315 |
| Second side | 316 |
| Through hole | 317 |
| Side wall | 32 |
| End wall | 33 |
| Accommodating cavity | 34 |
| Limiting step | 341 |
| Glue groove | 342 |
| Escape groove | 343 |
| Escape groove side wall | 3431 |
| Opening | 345 |
| Wire harness | 40 |
| Power wire harness | 41 |
| Sampling wire harness | 42 |
| Unmanned aerial vehicle | 200 |
| Vehicle body | 201 |

This application will be further described with reference to the accompanying drawings in the following embodiments.

### DETAILED DESCRIPTION OF EMBODIMENTS

The following describes embodiments of this application with reference to the accompanying drawings in the embodiments of this application. Apparently, the described embodiments are merely some but not all embodiments of this application.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application.

An embodiment of this application provides a method for manufacturing a battery module, including: disposing an adapting plate on a battery cell assembly, and connecting the adapting plate to tabs of the battery cell assembly; placing a fastening frame upside down, where the fastening frame includes an accommodating cavity with an opening on one side, the accommodating cavity is configured to accommodate the adapting plate and at least part of the battery cell assembly, and the placing a fastening frame upside down means placing the opening side of the accommodating cavity of the fastening frame upward; placing the adapting plate and the at least part of the battery cell assembly upside down in the accommodating cavity, where the placing the adapting plate and the at least part of the battery cell assembly upside down means placing the adapting plate and the battery cell assembly into the accommodating cavity of the fastening frame, with an end of the battery cell assembly at which the adapting plate is provided facing downward; and providing a filler in a gap between the inner side of the accommodating cavity and the battery cell assembly and a gap between the inner side of the accommodating cavity and the adapting plate.

Some embodiments of this application further provide a battery module, including a battery cell assembly, an adapting plate, a fastening frame, and a filler. The adapting plate is disposed on the battery cell assembly and connected to tabs of the battery cell assembly. The fastening frame is provided with an accommodating cavity. The adapting plate is further provided with a chip, and the adapting plate, the chip, and at least part of the battery cell assembly are accommodated in the accommodating cavity. The filler is disposed in a gap between the inner side of the accommodating cavity and the battery cell assembly or the adapting plate.

An embodiment of this application further provides a battery pack, including a battery housing and a battery module, where the battery module is the foregoing battery module.

An embodiment of this application further provides an unmanned aerial vehicle, including a vehicle body and a battery pack disposed in the vehicle body, where the battery pack supplies power to the vehicle body, and the battery pack is the foregoing battery pack.

According to the foregoing method for manufacturing a battery module, the battery module, and the battery pack and the unmanned aerial vehicle that include the battery module, the filler is added into the accommodating cavity through upside-down filling, so that the battery cell assembly and the adapting plate are fastened to the fastening frame, thereby better dealing with working conditions such as shock, vibration, and drop. As a result, not only the head of the battery cell assembly can be protected, but also a welding component on the adapting plate can be protected. In addition, under the action of the accommodating cavity in combination with upside-down glue filling, fewer fillers are used, thereby reducing the weight and costs and improving the energy density.

The following describes in detail some embodiments of this application with reference to the accompanying drawings. In absence of conflicts, the following embodiments and features in the embodiments may be combined.

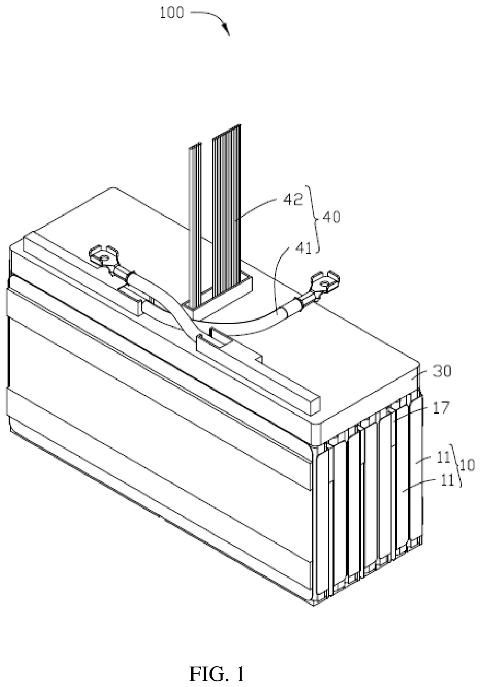

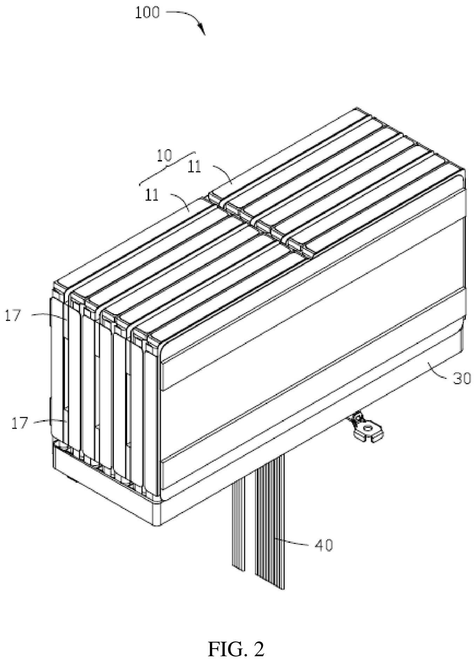

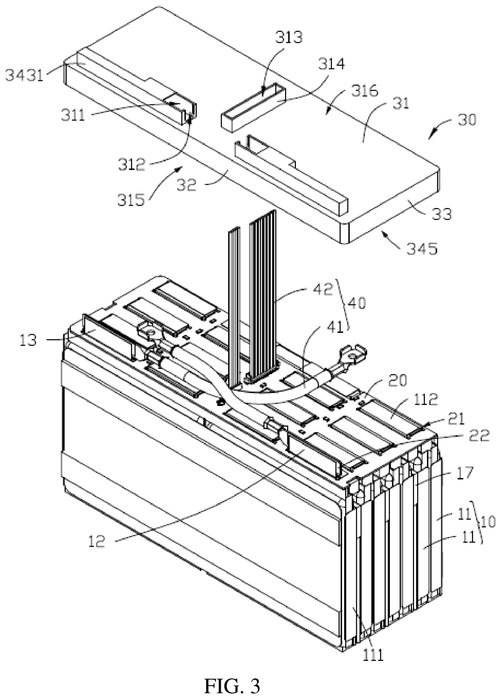

Referring to FIGs. 1 to 3, an embodiment of this application proposes a battery module 100. The battery module 100 includes a battery cell assembly 10, an adapting plate 20, a fastening frame 30, a wire harness 40, and a filler (not shown in the figure) added in the fastening frame 30. The adapting plate 20 is disposed on the battery cell assembly 10 and electrically connected to the battery cell assembly 10. A chip (not shown) is further provided on the adapting plate 20, and the chip is electrically connected to the battery cell assembly 10. The fastening frame 30 covers one side of the battery cell assembly 10 provided with the adapting plate 20 and accommodates the adapting plate 20 and the chip thereon. One end of the wire harness 40 is connected to the battery cell assembly 10 or the adapting plate 20 accommodated in the fastening frame 30, and the other end goes out of the fastening frame 30. The filler is added in the fastening frame 30 to fasten the battery cell assembly 10, the adapting plate 20, the fastening frame 30, and the wire harness 40.

Specifically, the battery cell assembly 10 includes a plurality of battery cells 11. Adjacent battery cells 11 are fixedly connected by a binding piece 17. The battery cell 11 includes a battery cell body 111 and two tabs 112. The binding piece 17 is disposed between at least two adjacent battery cell bodies 111, so that a gap is formed between the two adjacent battery cell bodies 111. The two tabs 112 are provided on the battery cell body 111 and extend from the same side of the battery cell body 111. One of the two tabs 112 is a positive tab, and the other is a negative tab. The battery cell 11 is electrically connected to an adjacent battery cell 11 by connecting positive and negative tabs. In addition, the battery cell 11 is electrically connected to the adapting plate 20 at a location where positive and negative electrodes are connected. In this embodiment, all battery cells 11 are connected in series. Tabs of two outermost battery cells 11 of the battery cell assembly 10 that are not connected to adjacent battery cells 11 are a first electrode 12 and a second electrode 13 of the battery cell assembly 10. In some embodiments, an end of the binding piece 17 close to the fastening frame 30 is located between two adjacent battery cell bodies 111.

In some embodiments, the binding piece 17 is foam.

In some embodiments, the first electrode 12 is a positive electrode, and the second electrode 13 is a negative electrode.

Tab holes 21 are provided in the adapting plate 20. The positive tab of the battery cell 11 and the negative tab of the adjacent battery cell 11 are led through corresponding tab holes 21 and then bent and welded together (or the negative tab of the battery cell 11 and the positive tab of the adjacent battery cell 11 are led through corresponding tab holes 21 and then bent and welded together).

In some embodiments, the chip is an encryption chip. The encryption chip is configured to encrypt a matching between the battery module 100 and an external electric device, to prevent a user from replacing the battery at will, thereby preventing potential electrical dangers caused by incompatibility between a replacement battery and the electric device.

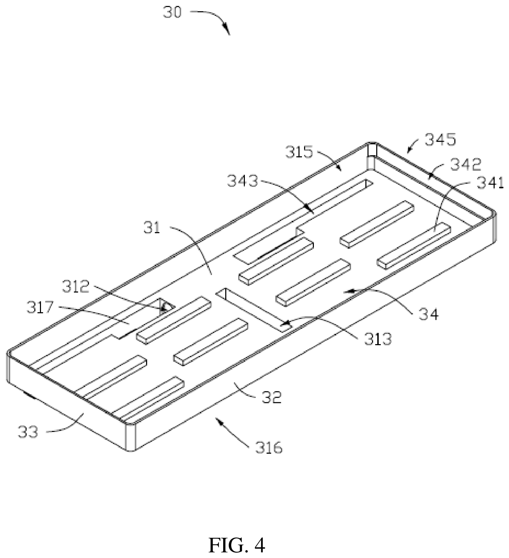

Referring to FIG. 4, the fastening frame 30 includes a top wall 31, two side walls 32, and two end walls 33. The top wall 31 is connected to the two side walls 32 and the two end walls 33. The two side walls 32 are both connected to the two end walls 33. In some embodiments, the two side walls 32 are disposed opposite each other along the stacking direction of the battery cells 11.

The top wall 31, the two side walls 32, and the two end walls 33 of the fastening frame 30 enclose an accommodating cavity 34 with an opening345 on one side. In some embodiments, the top wall 31 includes a first side 315 and a second side 316 disposed opposite each other, the battery cell assembly 10 and the accommodating cavity 34 are provided on the first side 315 of the top wall 31.

The accommodating cavity 34 is configured to accommodate the adapting plate 20 and the side of the battery cell assembly 10 provided with the tabs 112. The filler is added in the accommodating cavity 34 to fasten the tabs 112 of the battery cell assembly 10, the adapting plate 20, and the wire harness 40 in the accommodating cavity 34. In some embodiments, the opening 345 of the accommodating cavity faces towards the binding piece. In some embodiments, the gap communicates with the accommodating cavity 34, and the binding piece 17 is disposed outside the accommodating cavity 34.

Further, the contour of the accommodating cavity 34 matches the contour of the side of the battery cell assembly 10 provided with the tabs 112. In some embodiments, a gap is provided between the end wall 33 and the battery cell assembly 10, and the gap is provided with the filler.

In some embodiments, the filler is commonly used filler glue. In some embodiments, the filler is filled into the accommodating cavity 34, and the filler fixes the battery cell assembly 10, the adapting plate 20 and the fastening frame 30 after the filler cured.

A limiting step 341 is provided in the accommodating cavity 34. The limiting step 341 is provided on the top wall 31, and the limiting step 341 is provided on the first side 315 of the top wall 31. An extension direction of the limiting step 341 is perpendicular to a stacking direction of the battery cells 11. The limiting step 341 can abut against the adapting plate 20 when the fastening frame 30 is disposed on the battery cell assembly 10, to limit and guide an installation location of the fastening frame 30. Specifically, the limiting step 341 can abut against a plate body of the adapting plate 20 that is not connected to the tabs 112.

In addition, when the filler is added, the amount of filler used can be reduced, thereby reducing the weight of the battery module 100. When the extension direction of the limiting step 341 is perpendicular to the stacking direction of the battery cells 11, a flow channel for adding the filler can further be formed in the accommodating cavity 34, with a direction the same as gaps between the battery cells 11, helping to quickly add the filler into the gaps between the battery cells 11, so as to fixedly connect the battery cells 11 to the fastening frame 30. Moreover, the provision of the limiting step 341 can strengthen structural strength of the fastening frame 30, so as to prevent the fastening frame 30 from deformation during filling and thereby preventing the filler from overflow.

In some embodiments, the top wall 31 is further provided with a weight reduction groove (not shown in the figure). The weight reduction groove is provided opposite the limiting step 341 in an outer surface of the top wall 31. The weight reduction groove can reduce the weight of the fastening frame 30.

The accommodating cavity 34 is further provided with a glue groove 342. The glue groove 342 is provided in the side wall 32 or the end wall 33. The glue groove 342 can store the filler to strengthen fastening. Preferably, the glue groove 342 is provided on wall surfaces at both ends of the limiting step 341 in the extension direction, which are the end walls 33 in this embodiment. For the glue grooves 342 provided in the end walls 33, gaps may further be left for adding the filler into the accommodating cavity 34 during upside-down glue filling.

In some embodiments, the glue groove 342 is provided in the end wall 33, and the glue groove 342 is formed by recessing the surface of the end wall 33 in a direction further away from the other end wall 33.

The wire harness 40 includes a power wire harness 41 and a sampling wire harness 42. The power wire harness 41 is connected to the first electrode 12 or the second electrode 13 of the battery cell assembly 10. The sampling wire harness 42 is electrically connected to the adapting plate 20.

An escape groove 343 is provided in the accommodating cavity 34. A support sheet 22 is provided on the adapting plate 20. The support sheet 22 is substantially L-shaped. The support sheet 22 is accommodated in the escape groove 343. The first electrode 12 and the second electrode 13 are connected to the support sheet 22 after passing through the corresponding tab hole 21, so that the first electrode 12 and the second electrode 13 extend along a direction perpendicular to a plane of the adapting plate 20. The power wire harness 41 is welded and connected to the first electrode 12 or the second electrode 13 through the support sheet 22 and accommodated in the escape groove 343. The escape groove 343 is further configured to reserve a filling space for the filler, so that the power wire harness 41 and the first electrode 12 or the second electrode 13 are fastened in the accommodating cavity 34.

In some embodiments, a wall surface of the escape groove 343 is an insulating surface to insulate the welding surface of the power wire harness 41.

In some embodiments, the fastening frame 30 includes a through hole 317 running through the top wall 31, the escape groove 343 further includes an escape groove side wall 3431 extending from the top wall 31, the escape groove side wall 3431 is disposed on the second side 316 of the top wall 31. A bottom wall of the escape groove 343 is further provided with a harness outlet 311 running through the top wall 31. The harness outlet 311 is for the power wire harness 41 to go out of the fastening frame 30 and fasten the power wire harness 41.

In some embodiments, a side wall of the escape groove 343 adjacent to the harness outlet 311 is further provided with a fastening hole 312 communicating with the harness outlet 311. The fastening hole 312 is used to fasten the power wire harness 41 after the power wire harness is led out. In some embodiments, the fastening hole 312 is communicating with the through hole 317; and one end of the power wire harness 41 is connected to the battery cell assembly 10 or adapting plate 20 accommodated in the accommodating cavity 34, and the other end of the power wire harness 41 passes through the through hole 317 and the fastening hole 312 and is disposed on the second side 316 of the top wall 31. In some embodiments, the other end of the power wire harness 41 passes through the fastening hole 312, facing towards one of the end walls 33.

In some embodiments, the fastening hole 312 is semicircular, and the outer circumference of the power wire harness 41 is circular, so that when the power wire harness 41 passes through and is accommodated in the fastening hole 312, the outer circumference of the power wire harness 41 abuts against the semicircular hole wall, thereby fastening the power wire harness 41 in the fastening hole 312, and sealing a contact surface through abutting, to prevent the filler from overflowing therefrom.

The top wall 31 is further provided with a wire harness hole 313. The wire harness hole 313 is for the sampling wire harness 42 to go out of the fastening frame 30 and fasten the sampling wire harness 42.

In some embodiments, the outer circumference of the wire harness hole 313 of the top wall 31 is further provided with a protective piece 314. The protective piece 314 is configured to protect the sampling wire harness 42 passing through the wire harness hole 313.

It can be understood that in some embodiments, when no support sheet 22 is provided on the adapting plate 20, the first electrode 12 and the second electrode 13 may be directly welded and connected to the power wire harness 41. In this case, the escape groove 343 may not be provided. Instead, a wire harness hole 313 similar to the sampling wire harness 42 may be directly provided, or a harness outlet 311 may be directly provided in the top wall 31.

During assembly, firstly, the battery cell assembly 10 is connected to both the adapting plate 20 and the wire harness 40. Then, the power wire harness 41 and the sampling wire harness 42 are led through the harness outlet 311 and the wire harness hole 313, respectively. Then, the fastening frame 30 is pressed to flatten the limiting step 341 onto the adapting plate 20. In this case, the accommodating cavity 34 of the fastening frame 30 completely accommodates the tabs 112 of the battery cell assembly 10 and the adapting plate 20. The power wire harness 41 is clamped in the fastening hole 312, and the harness outlet 311, the fastening hole 312, and the wire harness hole 313 are filled up with fixing glue (for example, quick-drying glue), to fill voids between the power wire harness 41 and the harness outlet 311 and the fastening hole 312, and to fill voids between the sampling wire harness 42 and the wire harness hole 313, thereby fastening the power wire harness 41 and the sampling wire harness 42 to the fastening frame 30 and sealing the harness outlet 311, the fastening hole 312, and the wire harness hole 313. After the fixing glue is cured, the fastening frame 30 and the battery cell assembly 10 are placed flat upside down, so that the opening 345 of the accommodating cavity 34 of the fastening frame 30 is placed upwards. Voids (formed by connecting adjacent battery cells 11 through the binding piece 17) between the battery cells 11 above the end wall 33 are filled with fillers (the voids between the battery cells may be filled from on two sides or one side), to fill the accommodating cavity 34 of the fastening frame 30 with the fillers. Finally, after the fillers are cured, assembly of the battery module 100 is completed. In some embodiments, the fixing glue is cured before the filler.

In some embodiments, the fastening frame 30 is made of a transparent material, to help an operator to observe adding of the filler when the filler is added.

In some embodiments, the fastening frame 30 is made of a thermally conductive material PET, so that heat emitted by components on the adapting plate 20 can be transferred promptly, to lower temperature of the battery module 100.

An embodiment of this application further provides a battery pack, including a battery pack housing, a circuit board provided in the battery pack housing, a battery housing, and the foregoing battery module 100.

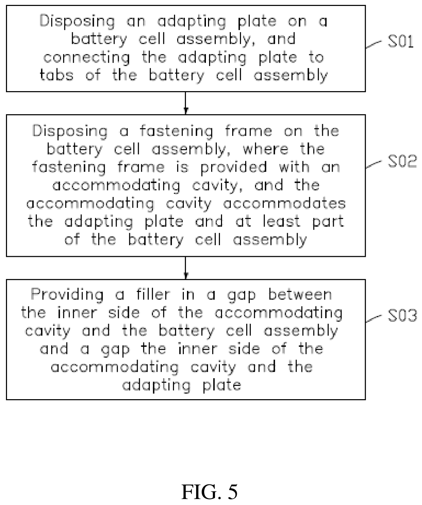

Referring to FIG. 5, a embodiment of this application further provides a method for manufacturing the battery module 100, including:
S01, disposing an adapting plate 20 on a battery cell assembly 10, and connecting the adapting plate 20 to tabs 112 of the battery cell assembly 10;
S02, disposing a fastening frame 30 on the battery cell assembly 10, where the fastening frame 30 is provided with an accommodating cavity 34, and the accommodating cavity 34 accommodates the adapting plate 20 and at least part of the battery cell assembly 10; and
S03, providing a filler in a gap between the inner side of the accommodating cavity 34 and the battery cell assembly 10 and a gap the inner side of the accommodating cavity 34 and the adapting plate 20.

Specifically, the fastening frame 30, the at least part of the battery cell assembly 10, and the adapting plate 20 are placed upside down, where placing the fastening frame 30 upside down means placing an opening 345 of the accommodating cavity 34 of the fastening frame 30 upward, and placing the adapting plate 20 and the battery cell assembly 10 in the accommodating cavity 34 of the fastening frame 30, with an end of the battery cell assembly 10 provided with the adapting plate 20 downward. Then, the filler is added in the accommodating cavity 34.

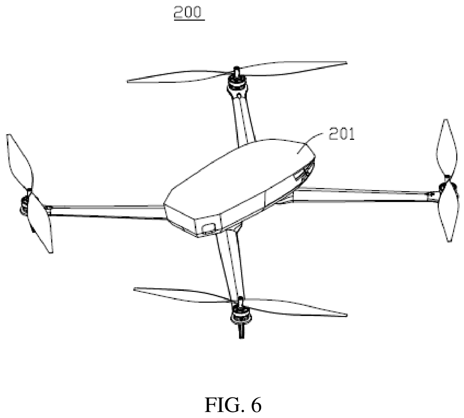

Referring to FIG. 6, another embodiment of this application further provides an unmanned aerial vehicle 200. The unmanned aerial vehicle 200 includes a vehicle body 201 and a battery pack disposed in the vehicle body 201. The battery pack supplies power to the vehicle body 201. The battery pack is the foregoing battery pack. Details are not repeated herein.

According to the battery module 100, the battery pack including the battery module 100, and the method for manufacturing the battery module 100 in this application, the filler is added in the accommodating cavity 34 through upside-down filling, so that the battery cell assembly 10 and the adapting plate 20 are fastened to the fastening frame 30, thereby better dealing with working conditions such as shock, vibration, and drop. As a result, not only the head of the battery cell assembly 10 can be protected, but also a welding component on the adapting plate 20 can be protected. In addition, under the action of the accommodating cavity 34 in combination with upside-down glue filling, fewer fillers are used compared with overall glue filling, thereby reducing the weight and costs and improving the energy density. In addition, after fixing glue is applied to the harness outlet 311, the fastening hole 312, and the wire harness hole 313, adding the filler can make waterproof and dustproof ability of the battery module 100 reach IP67 or higher. The entire fastening frame 30 is made of an insulating material, and components other than the battery cell body 111 of the battery cell assembly 10, the adapting plate 20, and the wire harness 40 are accommodated, so that no metal parts are exposed, to implement insulation. The fastening frame 30 may be made of a light and thin material or provided with a weight reduction groove, to reduce the weight. The fastening frame 30 may alternatively be made of a thermally conductive material such as PET to promptly transfer heat of overcurrent components on the adapting plate 20, and lower the temperature of the entire battery module 100. With the transparent battery module 100, the glue filling effect inside the battery module 100 can further be better observed when upside-down glue filling is performed, so that glue overflow is avoided and inspection can be performed without damage and demoulding.

The foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the spirit and essence of the technical solutions of this application.

## Claims

1. A battery module (100), comprising:
a battery cell assembly (10), the battery cell assembly (10) comprising a plurality of battery cells (11), each battery cell (11) comprising a body (111) and tabs (112);
an adapting plate (20) disposed on the battery cell assembly (10) and connected to the tabs (112) of the battery cell assembly (10);
a fastening frame (30) provided with an accommodating cavity (34); wherein the fastening frame (30) comprises a top wall (31), two side walls (32), and two end walls (33); the top wall (31), the two side walls (32), and the two end walls (33) enclose the accommodating cavity (34) and wherein the tabs (112) of the each battery cell (11) are at least partially accommodated in the accommodating cavity (34);
the adapting plate (20) and at least a part of the battery cell assembly (10) are accommodated in the accommodating cavity (34); and
a filler is filled in a gap between an inner side of the accommodating cavity (34) and the battery cell assembly (10) and the adapting plate (20).

2. The battery module (100) according to claim 1, wherein the filler comprises glue.

3. The battery module (100) according to claim 1, wherein a limiting step (341) is provided on the top wall (31), and the limiting step (341) abuts against the adapting plate (20).

4. The battery module (100) according to claim 3, wherein the battery module (100) further comprises a wire harness (40), one end of the wire harness (40) is connected to the battery cell assembly (10) or the adapting plate (20) accommodated in the accommodating cavity (34), and the other end extends out of the accommodating cavity (34).

5. The battery module (100) according to claim 4, wherein the wire harness (40) comprises a power wire harness (41) and a sampling wire harness (42);
the power wire harness (41) is connected to the tabs (112) on the outside of the battery cell assembly (10); and the sampling wire harness (42) is electrically connected to the adapting plate (20).

6. The battery module (100) according to claim 5, wherein a support sheet (22) is provided on the adapting plate (20), the power wire harness (41) is connected to the battery cell assembly (10) by the support sheet (22);
an escape groove (343) is provided in the accommodating cavity (34), the support sheet (22) is accommodated in the escape groove (343).

7. The battery module (100) according to claim 6, wherein the support sheet (22 ) is L-shaped.

8. The battery module (100) according to claim 6 or 7, wherein a bottom wall of the escape groove (343) is further provided with a harness outlet (311) running through the top wall (31);
the power wire harness (41) passes through the harness outlet (311) and extends out of the fastening frame (30).

9. The battery module (100) according to claim 8, wherein the harness outlet (311) is filled with a fixing glue, and the fixing glue fills a void between the power wire harness (41) and the harness outlet (311) .

10. The battery module (100) according to any one of claims 5 to 9, wherein a wire harness hole (313) is provided in the top wall (31) , wherein the wire harness hole (313) is for the sampling wire harness (42) to go out of the fastening frame (30) and fastening the sampling wire harness (42) .

11. The battery module (100) according to claim 10, wherein the outer circumference of the wire harness hole (313) of the top wall (31) is further provided with a protective piece (314), the protective piece (314) is configured to protect the sampling wire harness (42) passing through the wire harness hole (313).

12. The battery module (100) according to claim 11, wherein the wire harness hole (313) is filled with an other fixing glue, and the other fixing glue fills a void between the sampling wire harness (42) and the wire harness hole (313) .

13. The battery module (100) according to claim 3, wherein the limiting step (341) abuts against a plate body of the adapting plate (20) not connected to the tabs (112).

14. A battery pack, comprising a battery housing and a battery module (100) according to any one of claims 1 to 13.

15. An unmanned aerial vehicle (200), wherein the unmanned aerial vehicle (200) comprises a vehicle body and a battery pack disposed in the vehicle body, wherein the battery pack supplies power to the vehicle body, and the battery pack is the battery pack according to claim 14.
